# FASCICULE DE BREVET EUROPEEN

(11) **EP 1 254 795 B1**
(45) Date de publication et mention de la délivrance du brevet: **05.10.2005**
(21) Numéro de dépôt: 02009420.7
(22) Date de dépôt: 25.04.2002
(51) Int. Cl.: B60H 1/24

(54) **Dispositif de diffusion d'air à l'avant de l'habitacle d'un véhicule**
Vorrichtung zur Verteilung von Luft in einem vorderen Bereich einer Fahrgastzelle
Device for diffusing air to the forward section of a motor vehicle passenger compartment

(30) Priorité: 04.05.2001 FR 0105985
(43) Date de publication de la demande: 06.11.2002
(73) Titulaire: VALEO SYSTEMES THERMIQUES, 78320 Le Mesnil Saint-Denis (FR)
(72) Inventeur: Elliot, Gilles, 91080 Courcouronnes (FR); Petitjean, Pascale, 78640 Neauphle le Vieux (FR); Paumier, Carine, 78000 Versailles (FR)

(56) Documents cités:
- DE-A- 4 338 099
- DE-A- 19 918 515
- DE-C- 10 011 932
- FR-A- 2 541 958
- FR-A- 2 718 682
- GB-A- 2 118 712
- PATENT ABSTRACTS OF JAPAN vol. 006, no. 187 (M-158), 25 septembre 1982 (1982-09-25) & JP 57 095212 A (HONDA MOTOR CO LTD), 14 juin 1982 (1982-06-14)

## Description

L'invention concerne un dispositif de diffusion d'un air d'aération à l'avant de l'habitacle d'un véhicule automobile, cet air d'aération étant délivré par un boîtier de distribution d'un ensemble de chauffage ventilation et/ou climatisation, ledit dispositif comportant au moins un conduit d'aération alimentant au moins une bouche d'aération prévue dans la planche de bord et raccordé à une sortie dudit boîtier de distribution dont la section est réglée par un volet de distribution.

En général le boîtier de distribution comporte, comme présenté dans le document GB2118712, plusieurs sorties pour alimenter sélectivement les conduits de dégivrage, les conduits d'aération de la planche de bord et éventuellement des conduits d'aération de la partie inférieure de l'habitacle. Le boîtier de distribution comporte à cet effet des volets de répartition commandés à partir d'un tableau de commande disposé dans la console du véhicule ou dans la zone médiane de la planche de bord. Les conduits d'aération de la planche de bord délivrent de l'air vers plusieurs bouches d'aération notamment des bouches d'aération centrales et des bouches d'aération latérales. Ces bouches d'aération sont équipées d'ailettes orientables et d'un volet de réglage du débit d'air délivré, commandés manuellement par le conducteur ou le passager. Ce volet de réglage de débit est disposé près de l'orifice de sortie.

Les sections de ces bouches d'aération sont relativement petites et l'air d'aération sort à une vitesse supérieure à 5 m/s dans le mode aération seul ou dans un mode combiné aération/dégivrage ou aération/chauffage des pieds. Ces vitesses élevées entraînent des bruits.

Dans certains véhicules, il a déjà été proposé de délivrer l'air d'aération par des orifices de grande section répartis notamment sur la face supérieure de la planche de bord à l'arrière du pare-brise et des buses de dégivrage. Les surfaces totales de ces orifices sont calculées de telle manière que l'air sort à une vitesse inférieure à 5 m/s. Ce mode d'aération est "dite douce" par opposition à l'aération "dite forcée" dans laquelle l'air sort des bouches à une vitesse supérieure à 5 m/s.

On connaît également des dispositifs d'aération mixte, dans lesquels une partie de l'air d'aération est délivré de manière douce par des sorties de grande section réparties sur la face supérieure de la planche de bord et de manière forcée par des bouches d'aération dirigées vers l'habitacle. Chaque bouche d'aération comporte son volet de réglage, afin de permettre au conducteur ou au passager de régler le débit de chaque bouche. Le débit total d'air d'aération est réglé par un volet du boîtier de distribution. Mais ces dispositifs connus ne permettent pas de diffuser l'air d'aération en mode forcée uniquement.

Le but de l'invention est de proposer un module de diffusion tel que mentionné en introduction qui permette de régler la répartition d'air d'aération entre le mode d'aération "dite douce" et le mode d'aération "dite forcée".

Le but est atteint par le fait que ledit conduit d'aération est ménagé dans un module de diffusion qui s'étend transversalement sous la face supérieure de la planche de bord, par le fait que ledit conduit d'aération se divise en aval dans le sens de l'écoulement et l'air d'aération en au moins un conduit d'aération "dite douce" qui débouche sur la face supérieure de la planche de bord par des orifices d'aération de grande section, et en au moins un conduit d'aération "dite forcée" qui alimente au moins une bouche d'aération de petite section disposée sur la planche de bord face à l'habitacle et par le fait qu'il est prévu au moins un volet de répartition d'air à l'embranchement des trois conduits, ledit volet étant commandé indépendamment du volet de distribution.

Selon un premier mode de réalisation de l'invention le dispositif comporte un seul conduit d'aération disposé dans la zone médiane du module et se divisant en un seul conduit d'aération "dite douce" débouchant par des orifices répartis transversalement à l'arrière du pare-brise, et en deux conduits latéraux d'aération "dite forcée" disposés symétriquement dans la planche de bord.

Avantageusement, chaque conduit latéral d'aération "dite forcée" se subdivise en un canal médian alimentant une bouche d'aération centrale et en un canal latéral alimentant une bouche d'aération latérale.

Selon un deuxième mode de réalisation de l'invention le dispositif comporte deux conduits d'aération disposés symétriquement dans la zone médiane du module et destinés à alimenter en air d'aération respectivement la partie gauche et la partie droite de l'habitacle, chacun de ces conduits d'aération comportant son propre volet de répartition d'air.

Avantageusement, chaque conduit d'aération se divise en un seul conduit latéral d'aération "dite douce" débouchant par des orifices répartis transversalement à l'arrière du pare-brise et en un seul conduit latéral d'aération "dite forcée".

De préférence, le conduit latéral d'aération "dite forcée" se subdivise en un canal médian alimentant une bouche d'aération centrale et en un canal latéral alimentant une bouche d'alimentation latérale.

Selon un troisième mode de réalisation de l'invention, le dispositif comporte quatre conduits d'aération disposés transversalement dans la zone médiane du module, à savoir deux conduits médians délivrant de l'air d'aération vers les zones latérales de la planche de bord, et deux conduits latéraux délivrant de l'air d'aération vers les zones médianes gauche et droite de la planche de bord.

Avantageusement, chaque conduit d'aération se divise en un seul conduit d'aération "dite douce" débouchant par des orifices répartis transversalement à l'arrière du pare-brise et en un seul conduit d'aération "dite forcée", et comporte son propre volet de répartition d'air.

De préférence, chaque conduit d'aération médian passe au-dessus et à l'arrière du conduit d'aération "dite douce" alimenté par le conduit d'aération latéral adjacent.

Le conduit d'aération "dite forcée" alimenté par un conduit d'aération médian est disposé au-dessus et à l'arrière du conduit d'aération "dite douce" alimenté par ledit conduit d'aération médian.

De préférence, le module comporte en outre un conduit de dégivrage disposé dans la partie avant dudit module.

Le module peut comporter en outre deux conduits inférieurs latéraux pour alimenter en air la zone inférieure de l'habitacle. Le document FR2541958 décrit un dispositif de diffusion d'air comprenant des différentes sorties d'air de sections de passage d'air différentes.

D'autres avantages et caractéristiques de l'invention ressortiront à la lecture de la description suivante faite à titre d'exemple et en référence aux dessins annexés dans lesquels :
la figure 1 est une coupe verticale selon la figure I-I de la figure 2, d'un exemple de dispositif de diffusion selon le premier mode de réalisation de l'invention ;
la figure 2 est une vue schématique de dessus du dispositif de diffusion de la figure 1 ;
la figure 3 est une coupe verticale selon la ligne III-III de la figure 4, d'un dispositif de diffusion selon le deuxième mode de réalisation de l'invention ;
la figure 4 est une vue schématique de dessus du dispositif de diffusion de la figure 2 ;
la figure 5, semblable aux figures 1 et 3, montre une variante de réalisation d'un volet de répartition d'air entre l'aération "dite douce" et l'aération "dite forcée" qui autorise des fuites d'air ;
la figure 6 est une vue en coupe transversale verticale selon la ligne VI-VI de la figure 7 de la partie gauche d'un dispositif de diffusion selon un troisième mode de réalisation de l'invention ;
la figure 7 est une coupe longitudinale verticale du même dispositif selon la ligne VII-VII de la figure 6 ; et
la figure 8 est une coupe horizontale selon la figure VIII-VIII de la figure 7 du dispositif selon le troisième mode de réalisation de l'invention.

Sur les dessins on a représenté par la référence 1 la planche de bord d'un véhicule automobile qui comporte une face supérieure 2 qui s'étend sensiblement à l'horizontale à l'arrière de la base 3 d'un pare-brise 4, et une face frontale 5 disposée en face de l'habitacle 6. Dans la partie supérieure de la planche de bord 1, est prévu un module de diffusion 8 de l'air d'aération qui s'étend transversalement et qui comporte notamment au moins un conduit d'aération 9 raccordé à une sortie 10 d'un boîtier de distribution 11 d'un ensemble de chauffage ventilation et/ou climatisation non montré sur les dessins. La section de la sortie 10 est réglée par un volet de distribution 12.

Le conduit d'aération 9 s'étend verticalement dans la zone médiane de la planche de bord 1 au-dessus du boîtier de distribution 10. Ce conduit d'aération 9 se divise en aval dans le sens de la circulation de l'air d'aération, en un conduit d'aération "dite douce" 13 de grande section transversale qui débouche à l'arrière de la base 3 du pare-brise 4 par une pluralité d'orifices 14, dont la section de passage est également grande, et en au moins un conduit d'aération "dite forcée" 15 qui délivre de l'air d'aération vers des bouches d'aération centrales 16a, 16b et vers des bouches d'aération latérales 17a, 17b.

Les orifices d'aération "dite douce" 14 s'étendent transversalement sur la face supérieure 3 de la planche de bord 1, derrière les buses de dégivrage, tandis que les bouches d'aération 16a, 16b, 17a et 17b sont disposées sur la face frontale 5 de la planche de bord 1 en face de l'habitacle 6.

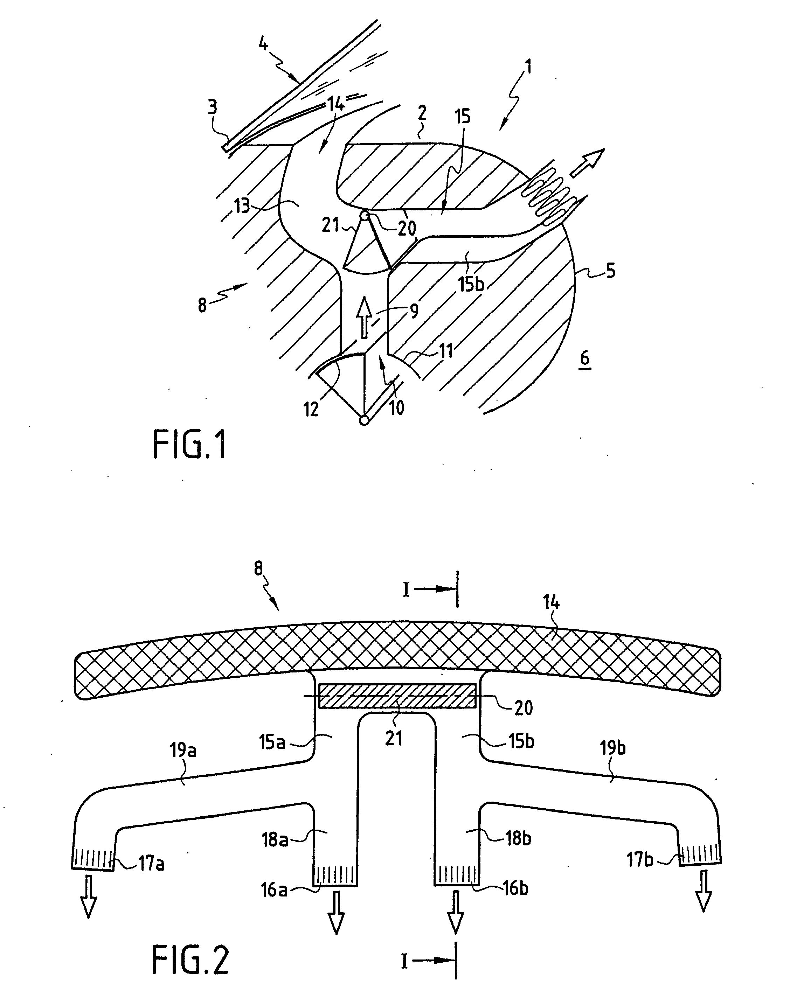

Selon le premier mode de réalisation de l'invention montré sur les figures 1 et 2, le module de diffusion 8 comporte un seul conduit d'aération 9, un seul conduit d'aération "dite douce" 13, et deux conduits d'aération "dite forcée" 15a, 15b. Chaque conduit d'aération "dite forcée", 15a, 15b, se subdivise en un canal médian 18a, 18b, alimentant une bouche d'aération centrale 16a, 16b, et en un canal latéral 19a, 19b, alimentant une bouche d'aération latérale 17a, 17b.

A l'embranchement du conduit d'aération 9, du conduit d'aération "dite douce" 13 et des conduits d'aération "dite forcée" 15a, 15b, est monté rotatif autour d'un axe transversal 20, un volet de répartition 21 d'air entre le conduit d'aération "dite douce" 13 et les conduits d'aération "dite forcée" 15a, 15b. Ce volet de répartition 21 est commandé à partir de la console indépendamment de la position du volet de distribution 12.

Le volet de répartition 21 permet de répartir l'air d'aération délivré par le conduit d'aération 9 entre les orifices d'aération "dite douce" 14 et les bouches d'aération 16a, 16b, 17a et 17b. Ces bouches d'aération sont en outre équipées d'ailettes orientables et de volets de réglage de débit.

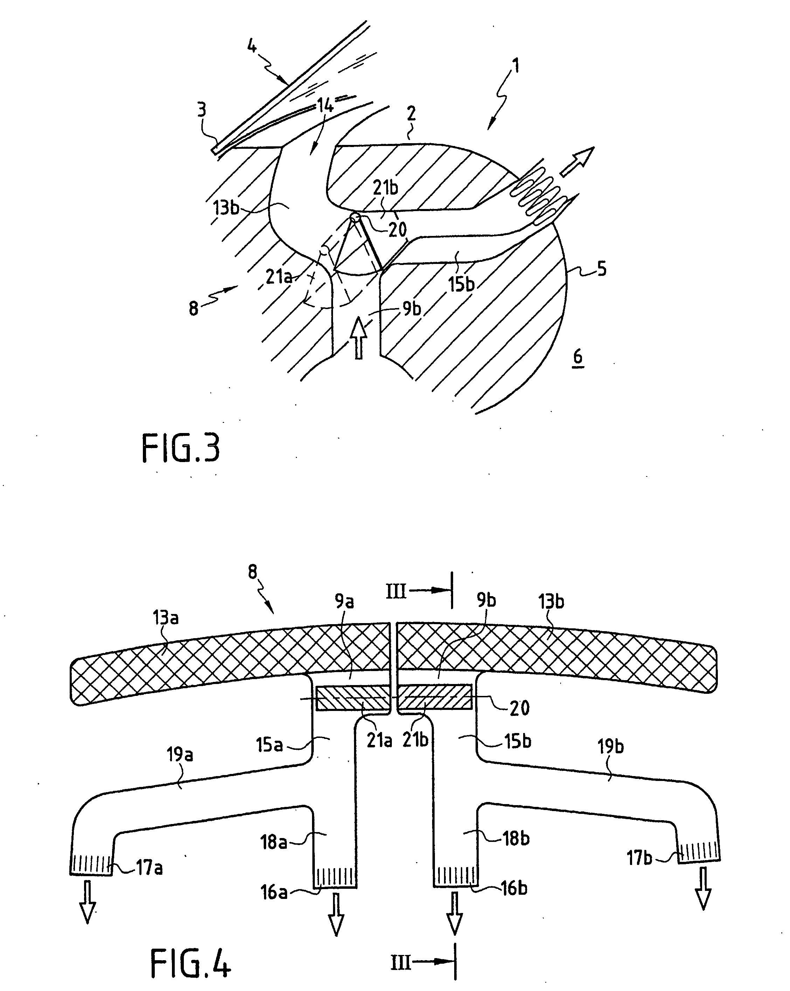

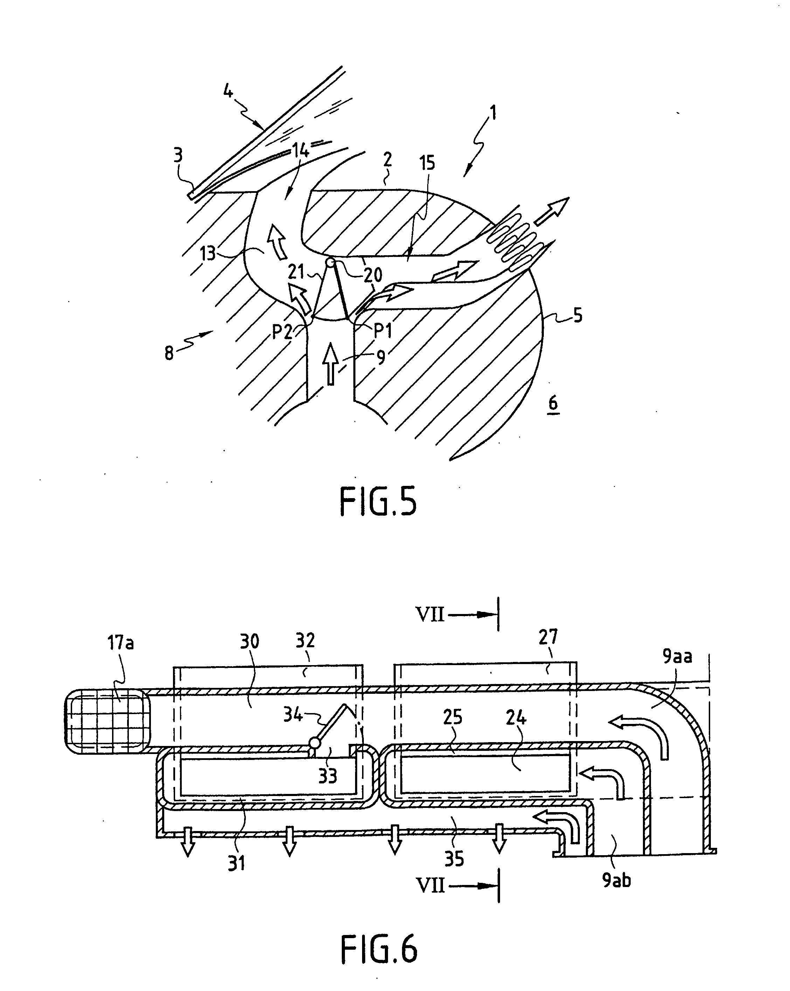

Les figures 3 et 4 montrent un deuxième mode de réalisation de l'invention. Dans ce deuxième mode de réalisation, le module de diffusion 8 comporte deux conduits d'aération 9a et 9b disposés transversalement dans la zone médiane de la planche de bord, le conduit d'aération 9a étant destiné à délivrer de l'air dans la partie gauche de l'habitacle 6, tandis que le conduit d'aération 9b est destiné à délivrer de l'air dans la partie droite de l'habitacle 6.

Chaque conduit d'aération, se divise en aval en un conduit d'aération "dite douce", 13a pour le conduit d'aération 9a et 13b pour le conduit d'aération 9b, et en un conduit d'aération "dite forcée", respectivement 15a pour le conduit d'aération 9a et 15b pour le conduit d'aération 9b. Comme pour le premier mode de réalisation, le conduit d'aération "dite forcée" 15a se subdivise en un canal médian 18a qui alimente la bouche d'aération centrale 16a, et en un canal latéral 19a qui alimente la bouche d'aération latérale 17a, et le conduit d'aération "dite forcée" 15b se subdivise en un canal médian 18b qui alimente la bouche d'aération centrale 16b et en un canal latéral 19b qui alimente la bouche d'aération latérale 17b.

Un premier volet de répartition 21a est prévu à l'embranchement du conduit d'aération 9a et des conduits d'aération 13a et 15a, et un second volet de répartition 21b est prévu à l'embranchement du conduit d'aération 9b et des conduits d'aération 13b et 15b. Ces deux volets de répartition 21a et 21b sont montés rotatifs autour d'un axe géométrique commun 20. Ces deux volets 21a et 21b sont commandés indépendamment l'un de l'autre et indépendamment de la position du volet de distribution 12.

Dans les deux modes de réalisation décrits ci-dessus, chaque volet de répartition 21, 21a et 21b, est mobile entre deux positions extrêmes, à savoir une première position, dans laquelle il obture l'entrée du conduit d'aération "dite douce" correspondant 13, 13a, 13b et tout l'air délivré par le conduit d'aération correspondant 9, 9a, 9b est expédié vers le conduit d'aération "dite forcée" correspondant et une deuxième position dans laquelle il obture l'entrée du conduit d'aération "dite forcée" correspondant et l'aération de l'habitacle 6 se fait en mode diffusion douce.

La figure 5 montre une variante de montage de l'un des volets de répartition 21, par exemple. Le volet de répartition 21 est monté mobile entre deux positions extrêmes, référencées P1 et P2, dans chacune desquelles, un débit de fuite est autorisé à passer par le conduit aval normalement obturé. Les positions P1 et P2 sont réglées en fonction des conditions climatiques du lieu où circule habituellement le véhicule.

Les figures 6 à 8 montrent la partie gauche d'une planche de bord 1, équipée d'un module de diffusion 8, prévu pour alimenter en air d'aération, indépendamment l'une de l'autre, quatre tranches transversales de l'habitacle 6.

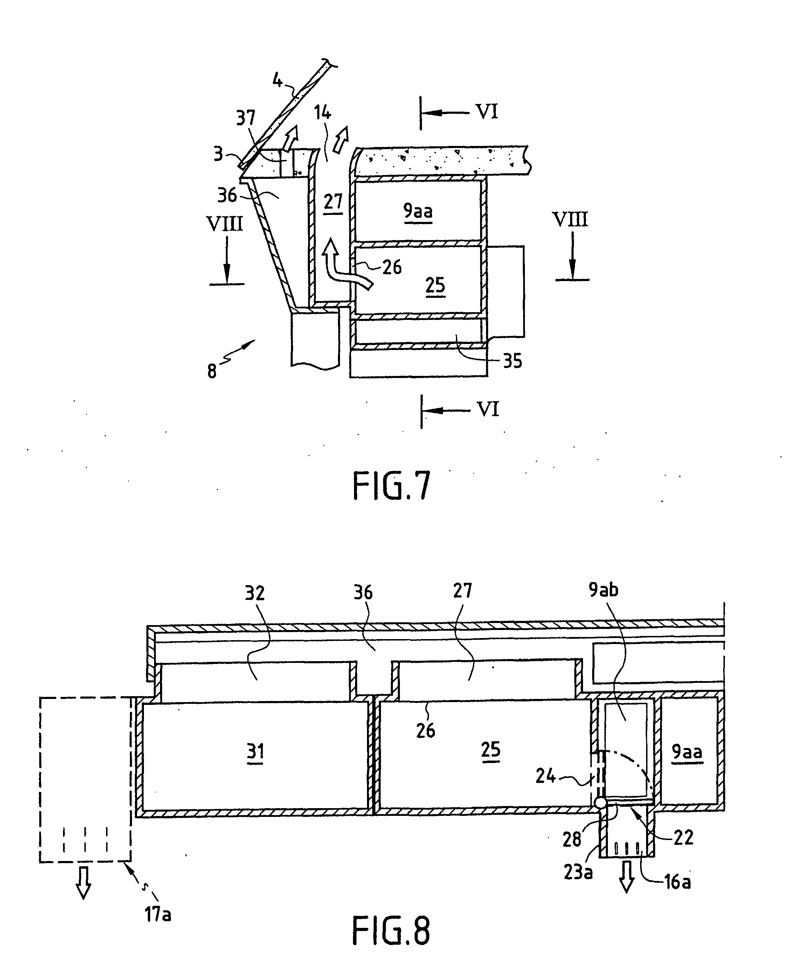

Ce module de diffusion 8 comporte quatre conduits d'aération disposés transversalement dans la zone centrale de la planche de bord. Seul le conduit d'aération médian gauche 9aa et le conduit d'aération latéral gauche 9ab sont montrés sur les figures 6 et 7. Les conduits d'aération médians sont destinés à délivrer de l'air d'aération vers les zones latérales de la planche de bord 1 et les conduits d'aération latéraux sont destinés à délivrer de l'air vers les zones médianes gauche et droite de la planche de bord 1.

Chaque conduit d'aération latéral, 9ab par exemple débouche, par un orifice 22 dans un conduit d'aération médian 23a menant à la bouche d'aération centrale 16a, et par un orifice 24 dans une chambre médiane gauche 25 dont la paroi avant comporte une ouverture 26 menant dans un premier conduit de diffusion "dite douce" 27 qui débouche sur la face supérieure 2 de la planche de bord 1 dans sa zone médiane gauche. Un premier volet de répartition 28 permet d'obturer sélectivement les orifices 22 et 24.

Chaque conduit d'aération médian, par exemple le conduit 9aa, est coudé et s'étend en partie au-dessus de la chambre médiane gauche 25. A gauche de la chambre médiane gauche 25, ce conduit d'aération médian 9aa, se divise en un premier conduit d'aération latéral 30 situé dans le prolongement du conduit 9aa, et en un deuxième conduit d'aération latéral, constitué d'une chambre latérale 31 contiguëe à la chambre médiane gauche 25 et d'un deuxième conduit de diffusion "dite douce" 32 qui débouche sur la face supérieure 2 de la planche de bord 1 dans sa zone latérale. L'orifice d'entrée 33 de la chambre latérale 31 et l'entrée du conduit d'aération latéral 30 peuvent être obturés sélectivement par un deuxième volet de répartition 34.

Ainsi que cela se voit sur les figures 6 et 7, le module 8 comporte en outre dans sa partie inférieure deux conduits latéraux inférieurs, un à droite, l'autre à gauche, 35 destinés à délivrer un air traité vers la partie inférieure de l'habitacle 6. Sur les figures 7 et 8, on voit en outre que le module 8 comporte dans sa zone avant un conduit de dégivrage 36 qui débouche en pied du pare-brise 4 par des buses de dégivrage 37.

Le module 8 peut être réalisé par assemblage de plusieurs pièces thermoformées, obtenues par moulage d'une matière synthétique assurant une rigidité suffisante au produit fini.

## Revendications

1. Dispositif de diffusion d'un air d'aération à l'avant de l'habitacle (6) d'un véhicule automobile, cet air d'aération étant délivré par un boîtier de distribution (11) d'un ensemble de chauffage ventilation et/ou climatisation, ledit dispositif comportant au moins un conduit d'aération (9) alimentant au moins une bouche d'aération (16a, 16b, 17a, 17b) prévue dans la planche de bord (1), et raccordé à une sortie (10) dudit boîtier de distribution dont la section est réglée par un volet de distribution (12),
**caractérisé par le fait que** ledit conduit d'aération (9) est ménagé dans un module de diffusion (8) qui s'étend transversalement sous la face supérieure (2) de la planche de bord (1),
**par le fait que** ledit conduit d'aération (9) se divise en aval dans le sens de l'écoulement de l'air d'aération en au moins un conduit d'aération "dite douce" (13) qui débouche sur la face supérieure (2) de la planche de bord (1) par des orifices d'aération (14) de grande section, et en au moins un conduit d'aération "dite forcée" (15) qui alimente au moins une bouche d'aération (16a, 16b, 17a, 17b) de petite section disposée sur la planche de bord (1) face à l'habitacle (6) et
**par le fait qu'**il est prévu au moins un volet de répartition d'air (21) à l'embranchement des trois conduits (9, 13, 15), ledit volet de répartition étant commandé indépendamment du volet de distribution (12).

2. Dispositif selon la revendication 1, **caractérisé par le fait qu'**il comporte un seul conduit d'aération (9) disposé dans la zone médiane du module (8) et se divisant en un seul conduit d'aération "dite douce" (13) débouchant par des orifices répartis transversalement à l'arrière du pare-brise (2), et en deux conduits latéraux d'aération "dite forcée" (15a, 15b) disposés symétriquement dans la planche de bord (1).

3. Dispositif selon la revendication 2, **caractérisé par le fait que** chaque conduit latéral (15a, 15b) d'aération "dite forcée" se subdivise en un canal médian (18a, 18b) alimentant une bouche d'aération centrale (16a, 16b) et en un canal latéral (19a, 19b) alimentant une bouche d'aération latérale (17a, 17b).

4. Dispositif selon la revendication 1, **caractérisé par le fait qu'**il comporte deux conduits d'aération (9a, 9b) disposés symétriquement dans la zone médiane du module (8) et destinés à alimenter en air d'aération respectivement la partie gauche et la partie droite de l'habitacle (6), chacun de ces conduits d'aération (9a, 9b) comportant son propre volet de répartition d'air (21a, 21b).

5. Dispositif selon la revendication 4, **caractérisé par le fait que** chaque conduit d'aération (9a, 9b) se divise en un seul conduit latéral d'aération "dite douce" (13a, 13b) débouchant par des orifices (14) répartis transversalement à l'arrière du pare-brise (2) et en un seul conduit latéral d'aération "dite forcée" (15a, 15b).

6. Dispositif selon la revendication 5, **caractérisé par le fait que** le conduit latéral d'aération "dite forcée" (15a, 15b) se subdivise en un canal (18a, 18b) médian alimentant une bouche d'aération centrale (16a, 16b) et en un canal latéral (19a, 19b) alimentant une bouche d'alimentation latérale (17a, 17b).

7. Dispositif selon la revendication 1, **caractérisé par le fait qu'**il comporte quatre conduits d'aération (9aa, 9ab) disposés transversalement dans la zone médiane du module, à savoir deux conduits médians (9aa) délivrant de l'air d'aération vers les zones latérales de la planche de bord (1), et deux conduits latéraux (9ab) délivrant de l'air d'aération respectivement vers les zones médianes gauche et droite de la planche de bord (1).

8. Dispositif selon la revendication 7, **caractérisé par le fait que** chaque conduit d'aération (9aa, 9ab) se divise en un seul conduit d'aération "dite douce" (25, 27 ; 31, 32) débouchant par des orifices (14) répartis transversalement à l'arrière du pare-brise (1) et en un seul conduit d'aération "dite forcée" (23a, 30), et comporte son propre volet de répartition d'air (28, 34).

9. Dispositif selon la revendication 8, **caractérisé par le fait que** chaque conduit d'aération médian (9aa) passe au-dessus et à l'arrière du conduit d'aération "dite douce" (25, 27) alimenté par le conduit d'aération latéral adjacent (9ab).

10. Dispositif selon la revendication 9, **caractérisé par le fait que** le conduit d'aération "dite forcée" (30) alimenté par un conduit d'aération médian (9aa) est disposé au-dessus et à l'arrière du conduit d'aération "dite douce" (31, 32) alimenté par ledit conduit d'aération médian (9aa).

11. Dispositif selon l'une quelconque des revendications 7 à 10, **caractérisé par le fait que** le module (8) comporte en outre un conduit de dégivrage (36) disposé dans la partie avant dudit module (8).

12. Dispositif selon l'une quelconque des revendications 7 à 11, **caractérisé par le fait que** le module (8) comporte en outre deux conduits inférieurs latéraux (35) pour alimenter en air la zone inférieure de l'habitacle (6).

## Patentansprüche

1. Vorrichtung zur Verbreitung einer Belüftungsluft im vorderen Bereich des Fahrzeuginnenraums (6) eines Kraftfahrzeugs, wobei diese Belüftungsluft von einem Verteilergehäuse (11) einer aus Heizung, Lüftung und/oder Klimatisierung bestehenden Baugruppe abgegeben wird, wobei die besagte Vorrichtung mindestens eine Lüftungsleitung (9) umfasst, die mindestens eine Entlüftungskappe (16a, 16b, 17a, 17b) versorgt, die auf dem Armaturenbrett (1) vorgesehen ist und an einen Ausgang (10) des besagten Verteilerkopfes angeschlossen ist, dessen Querschnitt von einer Verteilerklappe (12) geregelt wird,
**dadurch gekennzeichnet, dass** die besagte Lüftungsleitung (9) in einem Verbreitungsmodul (8) angeordnet ist, das quer unter der Oberseite (2) des Armaturenbrettes (1) verläuft,
**dadurch**, dass die besagte Lüftungsleitung (9) sich abwärts in Strömrichtung der Belüftungsluft in mindestens eine "sogenannte schlichte" Lüftungsleitung (13) teilt, die auf der oberen Seite (2) des Armaturenbretts (1) durch Lüftungsöffnungen (14) mit großem Querschnitt ausläuft und in mindestens eine "sogenannte erzwungene" Lüftungsleitung (15), die mindestens eine Entlüftungskappe (16a, 16b, 17a, 17b) mit kleinem Querschnitt versorgt, die auf dem Armaturenbrett (1), zum Fahrzeuginnenraum hin (6) angeordnet ist und
**dadurch**, dass mindestens eine Klappe zur Luftverteilung (21) an der Verzweigung der drei Leitungen (9, 13, 15) vorgesehen ist, wobei die besagte Verteilungsklappe unabhängig von der Verteilerklappe (12) gesteuert wird.

2. Vorrichtung nach Anspruch 1, **dadurch gekennzeichnet, dass** sie eine einzige Lüftungsleitung (9) umfasst, die im mittleren Bereich des Moduls (8) angeordnet ist und sich in eine einzige, "sogenannte schlichte" Lüftungsleitung (13) teilt, die durch quer auf der Rückseite der Windschutzscheibe (2) verteilte Öffnungen ausläuft und in zwei seitliche, "sogenannte erzwungene" Lüftungsleitungen (15a, 15b), die symmetrisch in dem Armaturenbrett (1) angeordnet sind.

3. Vorrichtung nach Anspruch 2, **dadurch gekennzeichnet, dass** sich jede seitliche, "sogenannte erzwungene" Lüftungsleitung (15a, 15b) in einen mittleren Kanal (18a, 18b) teilt, der eine mittlere Entlüftungskappe (16a, 16b) versorgt und einen seitlichen Kanal (19a, 19b), der eine seitliche Entlüftungskappe (17a, 17b) versorgt.

4. Vorrichtung nach Anspruch 1, **dadurch gekennzeichnet, dass** sie zwei Lüftungsleitungen (9a, 9b) umfasst, die symmetrisch im mittleren Bereich des Moduls (8) angeordnet sind und dafür bestimmt sind, jeweils den linken Teil und den rechten Teil des Karosseriegehäuses (6) mit Belüftungsluft zu versorgen, wobei jede dieser Lüftungsleitungen (9a, 9b) ihre eigene Luftverteilungskappe (21a, 21b) aufweist.

5. Vorrichtung nach Anspruch 4, **dadurch gekennzeichnet, dass** sich jede Lüftungsleitung (9a, 9b) in eine einzige seitliche, "sogenannte schlichte" Lüftungsleitung (13a, 13b) teilt, die durch quer auf der Rückseite der Windschutzscheibe (2) verteilte Öffnungen (14) und durch eine einzige seitliche "sogenannte erzwungene" Lüftungsleitung (15a, 15b) ausläuft.

6. Vorrichtung nach Anspruch 5, **dadurch gekennzeichnet, dass** sich die seitliche "sogenannte erzwungene" Lüftungsleitung (15a, 15b) in einen mittleren Kanal (18a, 18b) teilt, der eine mittlere Entlüftungskappe (16a, 16b) versorgt und einen seitlichen Kanal (19a, 19b), der eine seitliche Entlüftungskappe (17a, 17b) versorgt.

7. Vorrichtung nach Anspruch 1, **dadurch gekennzeichnet, dass** sie vier Lüftungsleitungen (9aa, 9ab) umfasst, die quer in dem mittleren Bereich des Modells angeordnet sind und zwar zwei mittlere Leitungen (9aa), die Belüftungsluft an die seitlichen Bereiche des Armaturenbretts (1) abgeben und zwei seitliche Leitungen (9ab), die Belüftungsluft jeweils links und rechts an die mittleren Bereiche des Armaturenbretts (1) abgeben.

8. Vorrichtung nach Anspruch 7, **dadurch gekennzeichnet, dass** jede Lüftungsleitung (9aa, 9ab) sich in eine einzige sogenannte "erzwungene" Lüftungsleitung (25, 27; 31, 32) aufteilt, die durch Öffnungen (14), die quer auf der Rückseite der Windschutzscheibe (1) verteilt sind, ausläuft und in eine einzige sogenannte "erzwungene" Lüftungsleitung (23a, 30), und ihre eigene Luftverteilungsklappe (28, 34) umfasst.

9. Vorrichtung nach Anspruch 8, **dadurch gekennzeichnet, dass** jede mittlere Lüftungsleitung (9aa) über und auf der Rückseite der "sogenannten schlichten" Lüftungsleitung (25, 27) verläuft, die von der angrenzenden seitlichen Lüftungsleitung (9ab) versorgt wird.

10. Vorrichtung nach Anspruch 9, **dadurch gekennzeichnet, dass** die sogenannte "erzwungene" Lüftungsleitung (30), die von einer mittleren Lüftungsleitung (9aa) versorgt wird, unter und auf der Rückseite der "sogenannten schlichten" Lüftungsleitung (31, 32) angeordnet ist, die von der besagten mittleren Lüftungsleitung (9aa) versorgt wird.

11. Vorrichtung nach einem der Ansprüche 7 bis 10, **dadurch gekennzeichnet, dass** das Modul (8) ferner eine Entfrostungsleitung (36) umfasst, die im vorderen Teil des besagten Moduls (8) angeordnet ist.

12. Vorrichtung nach einem der Ansprüche 7 bis 11, **dadurch gekennzeichnet, dass** das Modul (8) ferner zwei untere, seitliche Leitungen (35) umfasst, um den unteren Bereich des Fahrzeuginnenraums (6) mit Luft zu versorgen.

## Claims

1. A ventilation air diffusion device at the front of the passenger compartment (6) of a motor vehicle, this ventilation air being delivered through a distribution case (11) of a heating, ventilation and/or air-conditioning assembly, said device including at least one ventilation duct (9) feeding at least one vent (16a, 16b, 17a, 17b) provided in the dashboard (1) and connected to an outlet (10) of said distribution case, the cross-section of which is adjusted by a distribution flap (12),
**characterized by** the fact that said ventilation duct (9) is made in a diffusion module (8) which extends under the upper face (2) of the dashboard (1) transversely,
by the fact that said ventilation duct (9) is divided downstream in the direction of the ventilation air flow into at least one so-called "gentle" ventilation duct (13) that opens onto the upper face (2) of the dashboard (1) through ventilation ports (14) with a large cross-section, and into at least one so-called "forced" ventilation duct (15) that feeds at least one vent(16a, 16b, 17a, 17b) with a small cross-section positioned on the dashboard (1) facing the passenger compartment (6) and
by the fact that there is at least one air distribution flap (21) provided at the connection of the three ducts (9, 13, 15), said distribution flap being controlled independently of the distribution flap (12).

2. The device according to claim 1, **characterized by** the fact that it includes a single ventilation duct (9) positioned in the middle area of the module (8) and being divided into a single so-called "gentle" ventilation duct (13) opening up through transversely distributed ports at the rear of the windshield (2), and two so-called "forced" ventilation side ducts (15a, 15b) symmetrically positioned in the dashboard (1).

3. The device according to claim 2, **characterized by** the fact that each so-called "forced" ventilation side duct (15a, 15b) is subdivided into a middle channel (18a, 18b) feeding a central vent (16a, 16b) and a side duct (19a, 19b) feeding a side vent (17a, 17b).

4. The device according to claim 1, **characterized by** the fact that it includes two ventilation ducts (9a, 9b) symmetrically positioned in the middle area of the module (8) and intended to feed ventilation air into the left portion and right portion of the passenger compartment (6), respectively, each of these ventilation ducts (9a, 9b) including its own air distribution flap (21a, 21b).

5. The device according to claim 4, **characterized by** the fact that each ventilation duct (9a, 9b) is divided into a single so-called "gentle" ventilation side duct (13a, 13b) opening up through ports (14) transversely distributed at the rear of the windshield (2) and in a single so-called "forced" ventilation side duct (15a, 15b).

6. The device according to claim 5, **characterized by** the fact that the so-called "forced" ventilation side duct (15a, 15b) is subdivided into a middle channel (18a, 18b) feeding a central vent (16a, 16b) and into a side duct (19a, 19b) feeding a feed side vent (17a, 17b).

7. The device according to claim 1, **characterized by** the fact that it includes four ventilation ducts (9aa, 9ab) positioned in the middle area of the module transversely, i.e. two middle ducts (9aa) delivering ventilation air towards the side areas of the dashboard (1) and two side ducts (9ab) delivering ventilation air towards the left and right middle areas of the dashboard (1), respectively.

8. The device according to claim 7, **characterized by** the fact that each ventilation duct (9aa, 9ab) is divided into a single so-called "gentle" ventilation duct (25, 27; 31, 32) opening up through transversely distributed ports (14) at the rear of the windshield (1) and a single so-called "forced" ventilation duct (23a, 30) and includes its own air distribution flap (28, 34).

9. The device according to claim 8, **characterized by** the fact that each middle ventilation duct (9aa) passes above and at the rear of the so-called "gentle" ventilation duct (25, 27) fed through the adjacent ventilation side duct (9ab).

10. The device according to claim 9, **characterized by** the fact that the so-called "forced" ventilation duct (30) fed through a middle ventilation duct (9aa) is positioned above and at the rear of the so-called "gentle" ventilation duct (31, 32) fed through said middle ventilation duct (9aa).

11. The device according to any of claims 7 to 10, **characterized by** the fact that the module (8) further includes a de-icing duct (36) positioned in the front portion of said module (8).

12. The device according to any of claims 7 to 11, **characterized by** the fact that the module (8) further includes two lower side ducts (35) to feed air to the lower area of the passenger compartment (6).
